**Europäisches Patentamt**

(19) **European Patent Office**

**Office européen des brevets**

(11) Veröffentlichungsnummer: **0 025 577**
**B1**

(12) # EUROPÄISCHE PATENTSCHRIFT

(45) Veröffentlichungstag der Patentschrift:
**13.04.83**

(51) Int. Cl.³: **H 04 Q 11/04,** H 04 J 3/06

(21) Anmeldenummer: **80105367.9**

(22) Anmeldetag: **08.09.80**

(54) **Schaltungsanordnung zum Ausgleich der Phasenunterschiede zwischen dem Streckentakt auf einer mit einer PCM-Vermittlungsstelle verbindenden PCM-Zeitmultiplexleitung und dem Amtstakt dieser Vermittlungsstelle.**

(30) Priorität: **12.09.79 DE 2936938**

(43) Veröffentlichungstag der Anmeldung:
**25.03.81 Patentblatt 81/12**

(45) Bekanntmachung des Hinweises auf die Patenterteilung:
**13.04.83 Patentblatt 83/15**

(84) Benannte Vertragsstaaten:
**AT CH FR GB IT LI NL SE**

(56) Entgegenhaltungen:
**DE-B-2 641 488**
**FR-A-2 064 798**
**US-A-4 158 107**

(73) Patentinhaber: **SIEMENS AKTIENGESELLSCHAFT, Berlin und München Wittelsbacherplatz 2, D-8000 München 2 (DE)**

(72) Erfinder: **Zeiträg, Rolf, Dipl.-Phys., Dompfaffweg 3, D-8000 München 82 (DE)**

BUNDESDRUCKEREI BERLIN

Schaltungsanordnung zum Ausgleich der Phasenunterschiede zwischen dem Streckentakt auf einer mit einer PCM-Vermittlungsstelle verbindenden PCM-Zeitmultiplexleitung und dem Amtstakt dieser Vermittlungsstelle

Die Erfindung betrifft eine Schaltungsanordnung zum Ausgleich der Phasenunterschiede zwischen dem Streckentakt auf einer mit einer PCM-Vermittlungsstelle verbindenden PCM-Zeitmultiplexleitung und dem Amtstakt dieser Vermittlungsstelle bei nichtsynchronem, insbesondere plesiochronem Betrieb und Parallelverarbeitung der PCM-Informationen, die einen von der Zeitmultiplexleitung PCM-Informationen aufnehmenden Zwischenspeicher sowie einen diesem nachgeschalteten, zum Koppelfeld der Vermittlungsstelle hin auslesbaren Puffervollspeicher zum Überbrücken des durch den Frequenzunterschied von Streckentakt und Amtstakt bedingten Phasenunterschiedes aufweist.

Bei einer bekannten Schaltungsanordnung dieser Art (DE-OS 2 641 488) weist der Zwischenspeicher, der die Aufgabe hat, Phasenschwankungen des Streckentaktes aufzufangen, eine dem erwarteten maximalen Schwankungsbereich der Phasenlage dieses Streckentaktes entsprechende Speicherkapazität, im konkreten Fall eine Speicherkapazität von vier PCM-Worten auf. Wenn beim Betrieb dieses Zwischenspeichers aufgrund von Frequenzunterschieden zwischen Streckentakt und Amtstakt Einschreibzeitpunkt und Auslesezeitpunkt soweit aneinander gerückt sind, daß direkt benachbarte Speicherzellen von aufeinanderfolgendem Einschreiben und Auslesen betroffen sind, wird, je nachdem ob dieser Zustand durch eine höhere Streckentaktfrequenz oder durch eine höhere Amtstaktfrequenz zustande gekommen ist, über mehrere Amtsworzeitspannen hinweg das Auslesen aus dem Zwischenspeicher mit doppelter Frequenz vorgenommen, indem ein zweiter Bittaktimpuls einer Amtsworzeitspanne zum Auslesen herangezogen wird, oder es wird das Auslesen mehrmals hintereinander bei derselben Speicherzelle vorgenommen. Nach einem derartigen außerordentlichen Auslesen aus dem Zwischenspeicher sind der Zeitpunkt des Einschreibens und Auslesens bei ein und derselben Speicherzelle wieder genügend weit auseinandergerückt, um eine Überlappung zu vermeiden.

Die Wahl des Einsatzpunktes dieses außerordentlichen Auslesevorganges sowie die Bestimmung seiner Zeitdauer erfordern einen relativ großen Steuerungsaufwand. Aufgabe der vorliegenden Erfindung ist es daher, eine Schaltungsanordnung anzugeben, die diesbezüglich günstiger ist. Diese Aufgabe wird erfindungsgemäß dadurch gelöst, daß der Zwischenspeicher eine einem halben Pulsrahmen entsprechende Speicherkapazität aufweist und alternativ unwirksam geschaltet ist, in welchem Fall seine Speicherzellen jeweils innerhalb derselben vom Streckentakt bestimmten PCM-Wortzeitspanne, in der dort das Einschreiben erfolgt ist, um wenigstens zwei Bitzeitspannen verzögert wieder ausgelesen werden, oder wirksam geschaltet ist, in welchem Falle innerhalb derselben vom Streckentakt bestimmten Wortzeitspannen bei den einzelnen Speicherzellen zunächst das um die Zeitdauer eines halben Pulsrahmens vor der betreffenden Wortzeitspanne in die betreffende Speicherzelle eingeschriebene PCM-Wort ausgelesen und um wenigstens zwei Bitzeitspannen danach das anstehende PCM-Wort eingeschrieben wird, daß zwischen dem Zwischenspeicher und dem Puffervollspeicher ein Zwischenregister geschaltet ist, von dem aus das Einschreiben der vom Zwischenspeicher übernommenen PCM-Worte in den Puffervollspeicher aufgrund zweier alternativ wirksamer, innerhalb einer vom Amtstakt bestimmten PCM-Wortzeitspanne liegender Amtstaktschreibimpulse erfolgt, die jeweils so gewählt sind, daß sie etwa in die Mitte der vom Streckentakt bestimmten PCM-Wortzeitspannen fallen, und daß beim Zwischenspeicher die Umschaltung von der einen Betriebsart kurz vor dem Zeitpunkt erfolgt, zu dem beim Puffervollspeicher sich Schreib- und Lesebefehl bei derselben Speicherzelle überschneiden.

Nachstehend wird die Erfindung anhand von zwei Figuren näher erläutert.

Von den Figuren zeigt

Fig. 1 ein Blockschaltbild der erfindungsgemäßen Schaltungsanordnung,

Fig. 2 ein Zeitdiagramm zur Erläuterung der Betriebsweise der Anordnung gemäß Fig. 1.

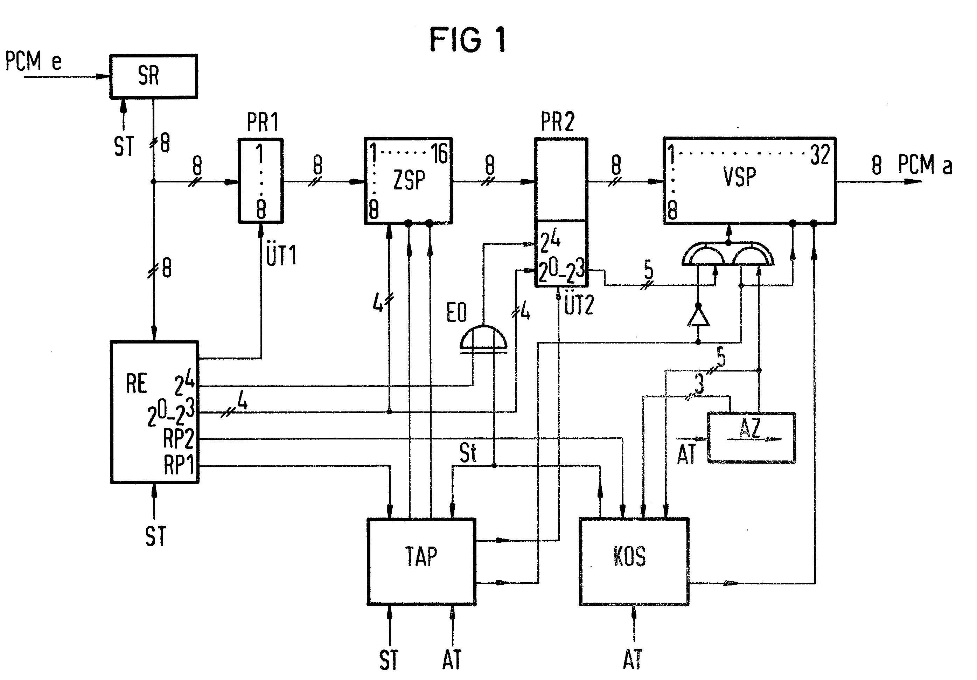

Auf der linken Seite der Schaltungsanordnung gemäß Fig. 1 ist eine Leitung PCMe gezeigt, die das ankommende Leitungsadernpaar einer PCM-Leitung veranschaulicht, über die eine Verbindung mit einer nicht dargestellten Zeitmultiplexvermittlungsstelle hergestellt wird. Auf diesem Teil der Zeitmultiplexleitung kommen die PCM-Informationen in Serienform an und werden in ein Schieberegister SR eingeschrieben, das mit dem Streckentakt ST der PCM-Leitung fortgeschaltet wird und der Serien-Parallelwandlung der PCM-Informationen dient. Von diesem Schieberegister aus gelangen die PCM-Worte in Parallelform in ein erstes Zwischenregister PR1, in dem sie bis zur Weitergabe an einen Zwischenspeicher ZSP wegen ihrer Paralleldarstellung acht Streckentakte lang zur Übernahme zur Verfügung stehen.

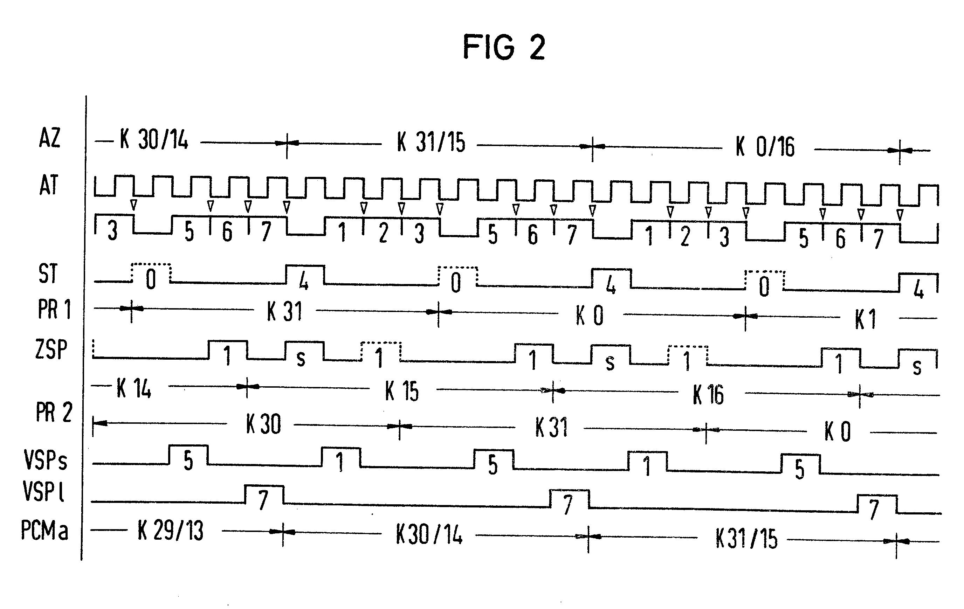

Der Zwischenspeicher ZSP weist eine einem halben Pulsrahmen entsprechende Speicherkapazität auf, hat also unter Zugrundelegung des PCM-Systems 30/32 sechzehn Speicherzellen für jeweils ein acht Bit umfassendes PCM-Wort. Das Einschreiben in den Zwischenspeicher vom Zwischenregister PR' aus erfolgt jeweils mit einem Streckentakt ST, der in der Mitte der jeweiligen Kanalzeitspanne liegt. Dies ist in Fig. 2 aus dem Vergleich der Zeilen ST, PR1 und ZSP erkennbar. Die Zeile PR1 zeigt bestimmte Kanalzeitspannen, hier diejenigen der Kanäle K31, K0 und K1. Die Zeile ST zeigt einige der innerhalb dieser Zeitspannen liegenden Strekkentakte und insbesondere den Takt 4 innerhalb dieser Kanalzeitspannen, der als Schreibtakt herangezogen wird und die Zeile ZSP zeigt außer den Lesezeitpunkten 1 beim Zwischenspeicher die erwähnten Schreibzeitpunkte s.

Durch eine Einheit RE, der ebenfalls die aus dem Schieberegister SR ausgelesenen PCM-Worte zugeführt werden, und die diese PCM-Worte auf das Rahmenkennungswort überwacht und daraus den Pulsrahmenanfang bestimmt, wird eine aus vier Bits bestehende Zeitkanaladresse geliefert, von der die vier niederwertigen Bits $2^0$ bis $2^3$ zur Adressierung der 16 Speicherzellen des Zwischenspeichers ZSP verwendet werden.

Für den Zwischenspeicher ZSP kommen alternativ zwei Betriebsweisen in Frage. Eine, bei der er unwirksam ist und bei der zwei Bittakte nach dem Einschreiben eines PCM-Wortes dieses wieder ausgelesen wird, was in Fig. 2 in Zeile ZSP durch den auf den Schreibtakt s folgenden, gestrichelt eingezeichneten Lesetakt 1 angedeutet ist. Im anderen Fall liegt, wie in Zeile ZSP mit ausgezogenen Linien dargestellt ist, der Lesetakt 1 um zwei Bitspannen vor dem Schreibtakt s. Das Auslesen bezieht sich dabei jeweils auf ein PCM-Wort, das um einen halben Pulsrahmen vorher in die betreffende Speicherzelle des Zwischenspeichers ZSP eingeschrieben worden ist. Die Umsteuerung von der einen Betriebsart auf die andere Betriebsart des Zwischenspeichers ZSP wird durch eine Einrichtung zur Taktanpassung TAP vorgenommen, und zwar unter Verwendung eines Steuersignals St, das eine Einrichtung KOS liefert, auf die noch eingegangen wird. Das Signal St ist lediglich ein Steuerbit, durch das das höchstwertige Bit einer drei Bit umfassenden Lesetaktadresse invertiert wird, so daß diese Adresse entweder den Lesetakt 2 oder den Lesetakt 6 innerhalb einer Kanalzeitspanne angibt. Auf eine weitere Steuerungsmaßnahme beim Umschalten des Zwischenspeichers ZSP wird nachstehend noch eingegangen.

Ausgangsseitig des Zwischenspeichers ZSP ist ein zweites Zwischenregister PR2 angeschlossen, in das die von dort ausgelesenen Informationen gelangen und das ein PCM-Wort in Parallelform aufnehmen kann, und zwar zusammen mit der vollständigen Zeitkanaladresse. Von dort aus gelangen die Informationen in einen Vollspeicher VSP, der dementsprechend 32 Speicherzellen für jeweils acht Bit aufweist. Die Ansteuerung dieser Speicherzellen erfolgt aufgrund der vom Zwischenregister PR2 gelieferten Ansteueradresse, und zwar, wie die Zeile VSPs in Fig. 2 zeigt, entweder mit dem Amtstakt 5 oder mit dem Amtstakt 1. Welcher der beiden Amtstakte zum Schreiben herangezogen wird, bestimmt die erwähnte Taktanpassungsschaltung TAP.

Sofern der Zwischenspeicher ZSP nicht in Betrieb ist, also, wie erläutert, bei ein und derselben Speicherzelle während der Kanalzeitlagen mit dem Streckentakt T4 eingeschrieben und mit dem Streckentakt T6 wieder ausgelesen wird, siehe Zeile ZSP in Fig. 2, bedeutet dies für die Ansteuerung des Vollspeichers VSP, daß, wenn beispielsweise ein PCM-Wort des Zeitkanals 10 aus dem Zwischenspeicher ausgelesen, in das zweite Zwischenregister PR2 übergeben und von dort aus in den Vollspeicher VSP eingeschrieben werden soll, daß dort ebenfalls die Speicherzelle 10 angesteuert werden muß. Ist hingegen der Zwischenspeicher in Betrieb, so ist, wie erwähnt, das PCM-Wort, das während einer bestimmten Zeitlage aus einer bestimmten Speicherzelle mit dem Streckentakt T2 ausgelesen wird, ein PCM-Wort, das um einen halben Pulsrahmen vor der betrachteten Kanalzeitlage in diese Speicherzelle eingeschrieben worden ist. Wenn es sich bei der betrachteten Kanalzeitlage, also z. B. wieder um diejenige des Kanals K10 handelt, darf zur Aufnahme des aus dem Zwischenspeicher ausgelesenen und über das Zwischenregister PR2 weitergegebenen PCM-Wortes im Vollspeicher VSP nicht wie im vorangehend betrachteten Fall dessen Speicherzelle 10 angesteuert werden, es muß vielmehr in eine Speicherzelle eingeschrieben werden, die in der Ansteuerreihenfolge um 16 Zeitkanallagen vor der Speicherzelle 10 liegt, also in die Speicherzelle 26. Um dies zu bewirken, muß als weitere Maßnahme bei der Umschaltung von der einen Betriebsart in die andere Betriebsart des Zwischenspeichers ZSP also das höchstwertige Bit $2^4$ der Ansteueradresse invertiert werden, was mit Hilfe des Exklusiv-Oder-Gliedes EO geschieht, dem einerseits dieses Bit $2^4$ und andererseits das Steuerbit St zugeführt wird, das den eigentlichen Umschaltbefehl darstellt.

Eine solche Umschaltung der Betriebsart des Zwischenspeichers ZSP ist dann erforderlich, wenn aufgrund großer Phasensprünge oder kontinuierlicher Phasenänderungen zwischen Streckentakt und Amtstakt die Gefahr besteht, daß bei ein und derselben Speicherzelle des Vollspeichers Schreibimpuls und Leseimpuls sich zeitlich überschneiden. Wenn in dieser Situation ein Phasensprung auftritt, der größer als ein Bit ist, also durch die erwähnte Hysterese bei der Umschaltung zwischen den beiden Einschreibtakten des Vollspeichers nicht mehr aufgefangen werden kann, dann besteht nämlich die Gefahr, daß sich dieses Überschneiden dauernd wiederholt und damit dauernd Schlupfverluste auftreten. Wenn dagegen in einer solchen kritischen Situation erfindungsgemäß eine Umschaltung der Betriebsart des Zwischenspeichers ZSP vorgenommen wird, dann ist zwar ein einmaliger Schlupfverlust möglich, danach aber sind Lesezeitpunkt und Schreibzeitpunkt bei jeweils derselben Speicherzelle des Vollspeichers um einen halben Pulsrahmen gegeneinander versetzt, so daß es nicht zu weiteren Schlupfverlusten kommen kann.

Den Zeitpunkt des Umschaltens der Betriebsart des Zwischenspeichers bestimmt eine Einrichtung KOS. Zu diesem Zweck wird im Falle der einen Betriebsart des Zwischenspeichers, bei der dieser nicht wirksam ist, eine Überwachung der Koinzidenz auf das Ende des durch den Streckentakt bestimmten Pulsrahmens, genauer gesagt der Taktzeitspannen T255 und T0 mit den Bitzeitspannen T4 bis T7 der durch den Amtstakt bestimmten Kanalzeitspanne K31 vorgenommen. Im Falle der anderen Betriebsart, bei der der Zwischenspeicher wirksam ist, wird auf das Zusammenfallen von Pulsrahmenende und den Taktzeitspannen T4 bis T7 der vom Amtstakt festgelegten Kanalzeitspanne K15 überwacht. Hiermit ist gewährleistet, daß eine Betriebsartumschaltung vor dem Überschneiden von Lesen und Schreiben im Vollspeicher VSP stattfindet, und daß beim Umschalten jeweils noch ein vollständiger Kanalinhalt in den Vollspeicher VSP gelangt. Darüber hinaus ist durch die erwähnte Wahl der Vergleichszeitpunkte sichergestellt, daß ein Schlupfverlust, der durch eine solche Betriebsartänderung im Vollspeicher zustande kommen kann, mit dem Pulsrahmenbeginn zusammenfällt und einen ganzen Pulsrahmen betrifft, was insbesondere dann von Bedeutung ist, wenn PCM-Informationen vermittelt werden, die pro Verbindung mehrere Zeitkanäle in Anspruch nehmen.

**Patentansprüche**

1. Schaltungsanordnung zum Ausgleich der Phasenunterschiede zwischen dem Streckentakt auf einer mit einer PCM-Vermittlungsstelle verbindenden PCM-Zeitmultiplexleitung und dem Amtstakt dieser Vermittlungsstelle bei nichtsynchronem, insbesondere plesiochronem Betrieb und Parallelverarbeitung der PCM-Informationen, die einen von der Zeitmultiplexleitung PCM-Informationen aufnehmenden Zwischenspeicher (ZSP) sowie einen diesem nachgeschalteten zum Koppelfeld der Vermittlungsstelle hin auslesbarem Puffervollspeicher (VSP) zum Überbrücken des durch den Frequenzunterschied von Streckentakt und Amtstakt bedingten Phasenunterschiedes aufweist, dadurch gekennzeichnet, daß der Zwischenspeicher (ZSP) eine einem halben Pulsrahmen entsprechende Speicherkapazität aufweist und alternativ unwirksam geschaltet ist, in welchem Falle seine Speicherzellen jeweils innerhalb derselben vom Streckentakt (ST) bestimmten PCM-Wortzeitspanne, in der dort das Einschreiben erfolgt ist, um wenigstens zwei Bitzeitspannen verzögert wieder ausgelesen werden, oder wirksam geschaltet ist, in welchem Falle innerhalb derselben vom Streckentakt bestimmten Wortzeitspannen bei den einzelnen Speicherzellen zunächst das um die Zeitdauer eines halben Pulsrahmens vor der betreffenden Wortzeitspanne in die betreffende Speicherzelle eingeschriebenen PCM-Wort ausgelesen und um wenigstens zwei Bitzeitspannen danach das anstehende PCM-Wort eingeschrieben wird, daß zwischen den Zwischenspeicher (ZSP) und den Puffervollspeicher (VSP) ein Zwischenregister (PR2) geschaltet ist, von dem aus das Einschreiben der vom Zwischenspeicher übernommenen PCM-Worte in den Puffervollspeicher aufgrund zweier alternativ wirksamer, innerhalb einer vom Amtstakt bestimmten PCM-Wortzeitspanne liegender Amtstakteinschreibimpulse erfolgt, die jeweils so gewählt sind, daß sie etwa in die Mitte der vom Streckentakt bestimmten PCM-Wortzeitspannen fallen, und daß beim Zwischenspeicher (ZSP) die Umschaltung von der einen Betriebsart in die andere kurz vor dem Zeitpunkt erfolgt, zu dem beim Puffervollspeicher (VSP) sich Schreib- und Lesebefehl bei derselben Speicherzelle überschneiden.

2. Schaltungsanordnung nach Anspruch 1, dadurch gekennzeichnet, daß dem Zwischenspeicher (ZSP) ein weiteres Zwischenregister (PR1) vorgeschaltet ist, von dem aus die in Parallelform übernommenen PCM-Worte aufgrund eines Auslesetaktes in den Zwischenspeicher (ZSP) übernommen werden, der in der Mitte der durch den vom Streckentakt fortgeschalteten Kanalzähler festgelegten PCM-Wortzeitspannen liegt.

**Claims**

1. Circuit arrangement for compensating the phase differences between the link pulse train on a PCM t.d.m. line which is connected to a PCM exchange and the exchange pulse train of this exchange in the case of non-synchronous, in particular plesiochronous operation and parallel processing of the items of PCM information, which circuit arrangement comprises an intermediate store (ZSP) which receives items of PCM information from the t.d.m. line, and a buffer full store (VSP) which is connected following the intermediate store and which may be read out to the switching network of the exchange and which serves to bridge the phase difference caused by the frequency difference between link pulse train and exchange pulse train, characterised in that the intermediate store (ZSP) possesses a storage capacity which corresponds to half the pulse frame and is alternately deactuated, in which case its storage cells are each read out again with a delay of at least two bit time intervals within the same PCM word time interval — determined by the link pulse train (ST) — in which the write-in has taken place, or actuated in which case, within the same word time intervals determined by the link pulse train, in the individual storage cells, firstly the PCM word is read out which has been entered into the relevent storage cell prior to the relevant word time interval by the duratior of one half pulse frame and at least two bit time intervals, after which the awaiting PCM word is written in, that an intermediate register (PR2) is connected between the intermediate store (ZSP) and the buffer full store (VSP), from which intermediate register the entry of the PCM words received from the intermediate store into the buffer full store is effected on the basis of two alternately operative exchange pulse train write-in pulses which occupy a PCM word time interval determined by the exchange pulse train, each of these exchange pulse train write-in pulses being selected to be such that they fall approximately in the centre of the PCM word time intervals determined by the link pulse train, and that in the case of the intermediate store (ZSP) the switch-over from one operating mode to the other takes place shortly before the time at which, in the buffer full store (VSP), write-in command and read-out command intersect in the same storage cell.

2. Circuit arrangement as claimed in claim 1, characterised in that the intermediate store (ZSP) is preceded by a further intermediate register (PR1) from which the PCM words which have been received in parallel form are transferred on the basis of a read-out pulse into the intermediate store (ZSP) which pulse is located in the centre of the PCM word time intervals specified by the channel counter which is stepped on by the link pulse train.

**Revendications**

1. Circuit pour compenser la différence de phase entre la cadence de voie d'une ligne de multiplexage temporel MIC reliée à un central MIC, et la cadence de service de ce central dans le cas d'un fonctionnement non synchrone, notamment plésiochrone et d'un traitement parallèle des informations MIC, et qui comporte une mémoire intermédiaire (ZSP) recevant des informations MIC de la part d'une ligne de multiplexage temporel, ainsi qu'une mémoire-tampon complète (VSP) branchée en série et en aval de la mémoire intermédiaire et pouvant être lue en direction du champ de couplage du central, pour supprimer la différence de phase conditionnée par la différence de fréquence existant entre la cadence de voie et la cadence de service, caractérisé en ce que la mémoire intermédiaire (ZSP) possède une capacité de mémoire correspondant à une demi-trame d'impulsions et en alternance est placée dans un état inactif, auquel cas ses cellules de mémoire sont à nouveau lues respectivement pendant le même intervalle de temps de mots MIC, déterminé par la cadence de voie (ST) et pendant laquelle l'enregistrement est effectué dans la mémoire, avec un retard égal à au moins deux intervalles de temps de bits, ou est placée à l'état actif, auquel cas pendant le même intervalle de temps de mots déterminé par la cadence de voie, dans les différentes cellules de mémoire, tout d'abord le mot MIC, enregistré à un intervalle de temps égal à une demi-trame d'impulsions avant l'intervalle de temps de mots considéré dans la cellule de mémoire considérée, est lu et le mot MIC présent est enregistré avec un retard d'au moins deux intervalles de temps de bits, qu'entre la mémoire intermédiaire (ZSP) et la mémoire tampon complète (VSP) est branché un registre intermédiaire (PR2), à partir duquel l'enregistrement des mots MIC pris en charge par la mémoire intermédiaire est réalisé dans la mémoire-tampon complète sur la base de deux impulsions d'enregistrement à la cadence de service, agissant en alternance et situées à l'intérieur d'un intervalle de temps de mots MIC déterminé par la cadence de service et qui sont choisis respectivement de manière à tomber approximativement au milieu des intervalles de temps de mots PCM déterminés par la cadence de voie, et que, dans le cas de la mémoire intermédiaire (ZSP), la commutation d'un mode de fonctionnement à l'autre intervient peu avant l'instant auquel, dans le cas de la mémoire-tampon complète (VSP), une instruction d'enregistrement et une instruction de lecture se chevauchent dans la même cellule de mémoire.

2. Circuit selon la revendication 1, caractérisé en ce qu'en série et en amont de la mémoire intermédiaire (ZSP) est branché un registre intermédiaire supplémentaire (PR1), à partir duquel les mots MIC enregistrés sous forme parallèle sont transmis dans la mémoire intermédiaire (ZSP) sur la base d'une impulsion de cadence de lecture, qui est située au milieu des intervalles de temps de mots PCM fixés par le compteur de canaux avancé par la cadence de voie.

# FIG 1

FIG 2

2/2

0 025 577